# EUROPEAN PATENT SPECIFICATION

(11) **EP 1 271 986 B1**
(45) Date of publication and mention of the grant of the patent: **24.03.2004**
(21) Application number: 02013506.7
(22) Date of filing: 17.06.2002
(51) Int. Cl.: H04Q 7/38

(54) **Mobile stations position determination method and system**
Verfahren und System für die Ortsbestimmung von Mobilstationen
Méthode et système de détermination de la position de stations mobiles

(30) Priority: 18.06.2001 JP 2001183750; 12.04.2002 JP 2002110506
(43) Date of publication of application: 02.01.2003
(73) Proprietor: NEC CORPORATION, Tokyo (JP)
(72) Inventor: Kondo, Takayuki, Minato-ku, Tokyo (JP)
(74) Representative: Glawe, Delfs, Moll & Partner

(56) References cited:
- EP-A- 0 800 319
- WO-A-01/10154
- US-A- 5 901 358
- US-A- 6 011 974
- 3GPP-GSM-ETSI: "LCS Location Services - Functional Description - Stage 2 3GPP TS 03.71 v8.1.0 Release 1999" ETSI TS 101724 V8.1.0, April 2001 (2001-04), pages 74-77, XP002211439

## Description

### BACKGROUND OF THE INVENTION

### FIELD OF THE INVENTION:

The present invention relates to a mobile station position detection scheme and, more particularly, to a mobile station position detection scheme for detecting the position of a mobile station on the basis of a radio propagation time between the mobile station and a plurality of radio base stations and position information from these radio base stations.

### DESCRIPTION OF THE PRIOR ART:

Conventionally, a mobile station position detection scheme of this type is used to detect the position of a mobile station.

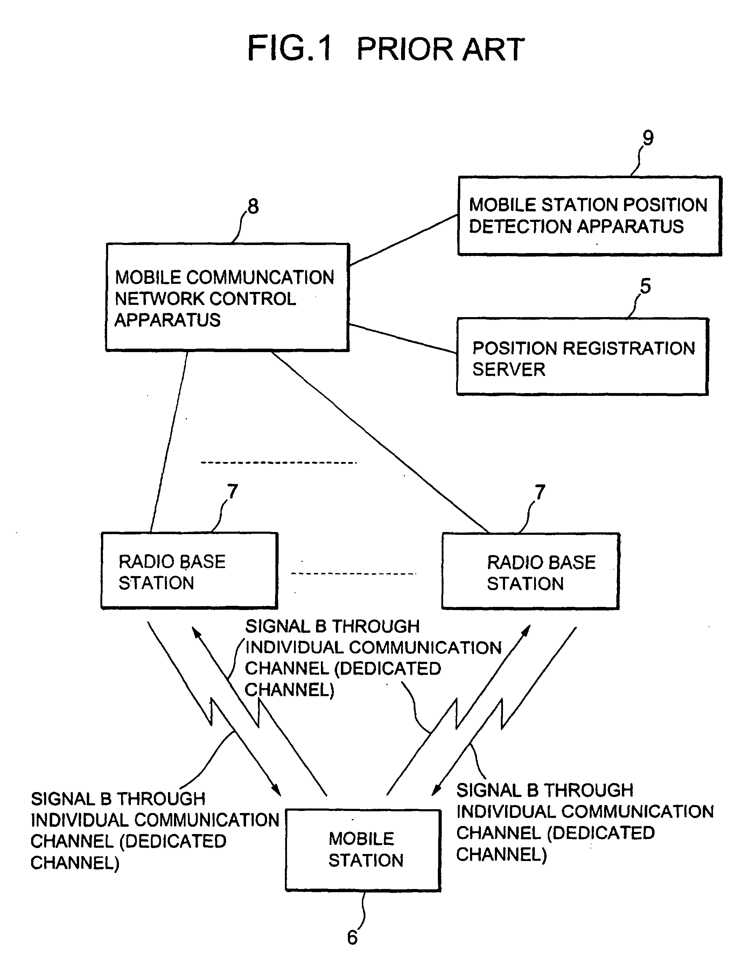

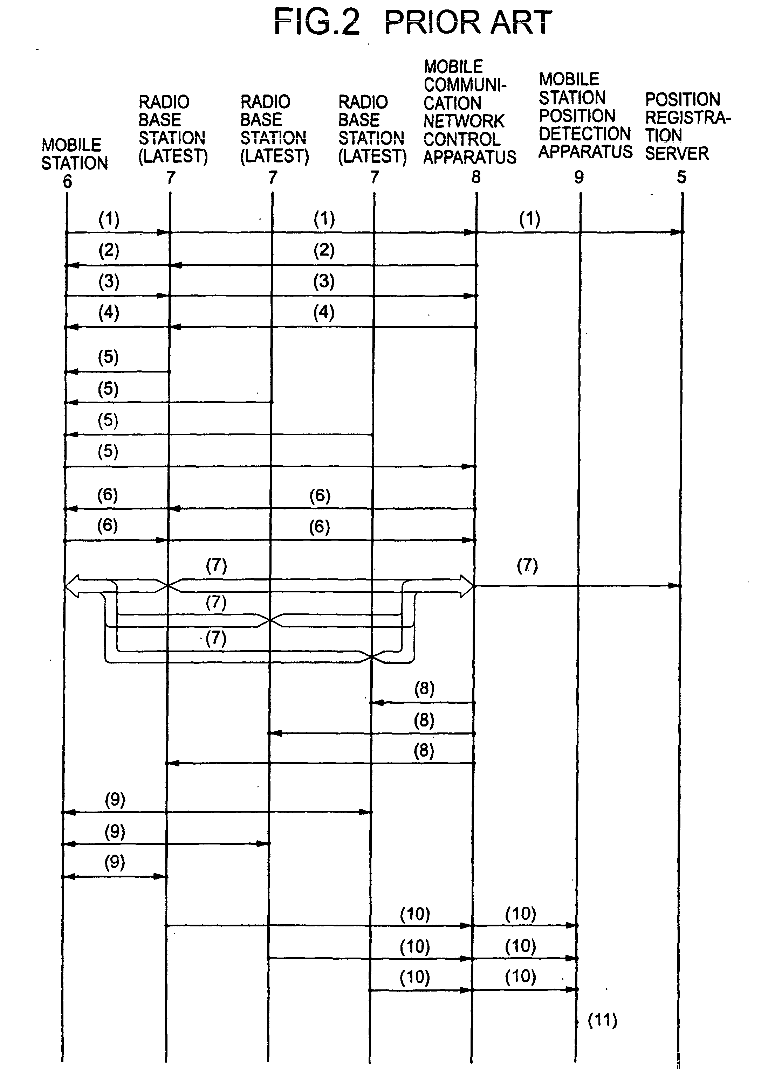

Fig. 1 is a block diagram for explaining the conventional mobile station position detection scheme. Referring to Fig. 1, the conventional mobile station position detection scheme has a mobile station 6, a plurality of radio base stations 7, a mobile communication network control apparatus 8, a position registration server 5, and a mobile station position detection apparatus 9. The position of the mobile station 6 is detected by operations (1) to (11) shown in Fig. 2.
(1) When the mobile station 6 is powered on or moves to the area of another radio base station 7, a position registration signal is sent from the mobile station 6 to the closest radio base station 7 using a reverse common channel (random access channel). The position registration signal is relayed by the radio base station 7 and sent to the position registration server 5 through the mobile communication network control apparatus 8. Upon receiving the position registration signal, the position registration server 5 registers a mobile station ID and area code added to the position registration signal, and a radio base station ID. The position registration server 5 manages the radio base station ID and mobile station ID for each area code.
(2) The mobile communication network control apparatus 8 receives a position detection request signal (with the ID of the mobile station 6 to be detected) for requesting position detection of the mobile station 6. On the basis of information registered in the position registration server 5, the mobile communication network control apparatus 8 sends a call signal to the mobile station 6 whose position is to be detected, through each radio base station 7 that is present in the position registration area. A paging channel is used for this transmission.
(3) Upon receiving the call signal, the mobile station 6 sends a reply signal to the mobile communication network control apparatus 8 through the closest radio base station 7 using a reverse common channel (random access channel).
(4) The mobile communication network control apparatus 8 requests, using a forward common channel (forward access channel) through the radio base station 7 through which the reply signal from the mobile station 6 is received, the mobile station 6 to "receive a notification signal (broadcast channel) transmitted from each radio base station 7 near the mobile station 6 and measure the signal level of each notification signal".
(5) Upon receiving a notification signal (broadcast channel) transmitted from each radio base station 7 near the mobile station 6, the mobile station 6 measures the signal level of each notification signal and sends, to the mobile communication network control apparatus 8 through the closest radio base station 7 using a reverse common channel (random access channel), information representing radio base stations 7 which have high reception levels equal to or more than a predetermined level. At this time, the number of radio base stations 7 with high reception levels is 3 or more at a probability of about 1/3, 2 at a probability of about 1/3, and 1 at a probability of about 1/3, though it changes depending on the geographical features and the density of base stations. Since one radio base station 7 suffices for communication, the "predetermined level" is so set as to obtain the notification signal from one radio base station 7.
(6) The mobile communication network control apparatus 8 sends, to the mobile station 6 through the closest radio base station 7 using a forward common channel (forward access channel), "information necessary for communicating with the plurality of radio base stations 7 whose reception levels of notification signals (broadcast channels) transmitted from the radio base stations 7 near the mobile station 6 are high by using individual communication channels (dedicated channels)". The mobile station 6 sends the capability information (indicating ACK) of the mobile station 6 to the mobile communication network control apparatus 8 through the closest radio base station 7 using a reverse common channel (random access channel).
(7) Between the mobile communication network control apparatus 8 and the mobile station 6, a communication state in which communication is possible is set using individual communication channels (dedicated channels) and the plurality of radio base stations 7 whose reception levels of notification signals (broadcast channels) transmitted from the radio base stations 7 near the mobile station 6 are high. When a communication state with the mobile station 6 is set, the mobile communication network control apparatus 8 registers the state of the mobile station 6 as the communication state in the position registration server 5. When the mobile communication network control apparatus 8 and mobile station 6 cease to be in the communication state, the mobile communication network control apparatus 8 cancels the communication state.
(8) In this communication state, the mobile communication network is requested to detect the position of the mobile station 6. When the mobile communication network control apparatus 8 receives a position detection instruction signal which requests the position of the mobile station 6, the position detection instruction signal is supplied to the plurality of radio base stations 7 which are in the communication state with the mobile station 6.
(9) Each of the plurality of radio base stations 7 in the communication state with the mobile station 6 obtains a radio propagation time from the transmission timing of a signal A using a forward individual communication channel (dedicated channel), the reception timing of a signal B sent from the mobile station 6 using a reverse individual communication channel (dedicated channel) in correspondence with the signal A, and a processing time between reception of the signal A and sending of the signal B by the mobile station 6, which is measured and defined in advance.
(10) Each of the plurality of radio base stations 7 in the communication state with the mobile station 6 sends the radio propagation time to the mobile station position detection apparatus 9 through the mobile communication network control apparatus 8.
(11) The mobile station position detection apparatus 9 calculates the position of the mobile station 6 on the basis of the radio propagation time between the mobile station 6 and each of the plurality of radio base stations 7 and pieces of position information of the plurality of radio base stations 7, which are stored in advance.

In the above-described conventional mobile station position detection scheme, as indicated by (7) to (11), (7) between the mobile communication network control apparatus and the mobile station, the communication state in which communication is possible is ensured using an individual communication channel (dedicated channel) and through a plurality of radio base stations whose reception levels of notification signals (broadcast channels) transmitted from the radio base stations near the mobile station are high. (8) In this communication state, the mobile communication network is requested to detect the position of the mobile station. When the mobile communication network control apparatus receives a position detection instruction signal which requests the position of the mobile station, the position detection instruction signal is supplied to the plurality of radio base stations which communicate with the mobile station. (9) Each of the plurality of radio base stations which communicate with the mobile station obtains a radio propagation time from the transmission timing of the signal A using a forward individual communication channel (dedicated channel), the reception timing of the signal B sent from the mobile station using a reverse individual communication channel (dedicated channel) in correspondence with the signal A, and the processing time between reception of the signal A and sending of the signal B by the mobile station, which is measured and defined in advance. (10) Each of the plurality of radio base stations which communicate with the mobile station sends the radio propagation time to the mobile station position detection apparatus of the mobile communication network control apparatus. (11) The mobile station position detection apparatus calculates the position of the mobile station on the basis of the radio propagation time between the mobile station and each of the plurality of radio base stations and pieces of position information of the plurality of radio base stations, which are stored in advance. As indicated by (9), each of the plurality of radio base stations which communicate with the mobile station obtains the radio propagation time from the transmission timing of the signal A using a forward individual communication channel (dedicated channel), the reception timing of the signal B sent from the mobile station using a reverse individual communication channel (dedicated channel) in correspondence with the signal A, and the processing time between reception of the signal A and sending of the signal B by the mobile station, which is measured and defined in advance. For this reason, the radio propagation time cannot be obtained unless transmission/reception using an individual communication channel (dedicated channel) is in progress, i.e., it can be obtained only when the communication state is set between the mobile communication network control apparatus and the mobile station using an individual communication channel (dedicated channel) with a base station.

In addition, as indicated by (5) to (7), (5) upon receiving a notification signal (broadcast channel) transmitted from each radio base station near the mobile station, the mobile station measures the signal level of each notification signal and sends, to the mobile communication network control apparatus through the closest radio base station using a reverse common channel (random access channel), information representing radio base stations which have high reception levels equal to or more than a predetermined level (at this time, the number of radio base stations with high reception levels is 3 or more at a probability of about 1/3, 2 at a probability of about 1/3, and 1 at a probability of about 1/3, though it changes depending on the geographical features and the density of base stations). (6) The mobile communication network control apparatus sends, to the mobile station through the closest base station using a forward common channel (forward access channel), "information necessary for communicating with the plurality of radio base stations whose reception levels of notification signals (broadcast channels) transmitted from the radio base stations near the mobile station are high by using individual communication channels (dedicated channels)". The mobile station sends the capability information (indicating ACK) of the mobile station to the mobile communication network control apparatus through the closest base station using a reverse common channel (random access channel). (7) Between the mobile communication network control apparatus and the mobile station, a communication state in which communication is possible is ensured using individual communication channels (dedicated channels) and through the plurality of radio base stations whose reception levels of notification signals (broadcast channels) transmitted from the radio base stations near the mobile station are high. Since the number of radio base stations with high reception levels equal to or more than a predetermined level is 3 or more at a probability of about 1/3, only one or two radio base stations can be detected at a probability of 2/3. Hence, position detection of the mobile station can be executed

US-A-6 011 974 discloses a system in which a round-trip calculation is used to determine the distance between a mobile radio station and a radio base station using apparent uplink and downlink signal propagation air-times. The mobile station and the base station report to a service node in the mobile network the local departure and arrival times of the uplink and downlink signals, and calculate the apparent propagation times. The distances to at least three base stations whose locations are known can be used in a triangulation algorithm to determine the position of the mobile station.

### SUMMARY OF THE INVENTION

The present invention has been made in consideration of the above situation, and has as its object to provide a mobile station position detection scheme capable of obtaining a radio propagation time even when no communication state is set between a mobile communication network control apparatus and a mobile station and also always accurately detecting the position of a mobile station.

In order to achieve the above object, according to the first main aspect of the present invention, there is provided a mobile station position detection according to claim 1.

The mobile station in the above first main aspect can receive the position detection instruction signal from each of the radio base stations, then receive the notification signal sent from each of the plurality of radio base stations, and extract at least three radio base stations in descending order of reception signal power level.

The mobile communication network control means in the above first main aspect can draw three circles which have centers at three positions indicated by the position information from the radio base stations corresponding to three of the radio propagation times received from the predetermined number of radio base stations and use, as radii, distances obtained on the basis of the radio propagation times corresponding to the radio base stations, and obtain the position of the mobile station from an intersection relationship between the three circles.

In order to achieve the above object, according to the second main aspect of the present invention, there is provided a mobile station position detection system according to claim 4.

The mobile station position detection system further comprises a position registration server which registers whether the mobile station is in the communication state, and the mobile communication network control apparatus can receive the position detection request signal which requests position detection of the mobile station and check by the position registration server whether the mobile station is in the communication state.

The mobile station in the second aspect receives the position detection instruction signal from each of the radio base stations, then receives the notification signal sent from each of the plurality of radio base stations, and extracts at least three radio base stations in descending order of reception signal power level.

The mobile station position detection apparatus in the second aspect draws three circles which have centers at three positions indicated by the position information from the radio base stations corresponding to three of the radio propagation times received from the mobile communication network control apparatus and use, as radii, distances obtained on the basis of the radio propagation times corresponding to the radio base stations, and obtains the position of the mobile station from an intersection relationship between the three circles.

The radio base station in the first and second aspects subtracts a predetermined processing time in the mobile station from a difference between the sending time of the latest notification signal and the reception time of the position detection signal and divides a thus obtained time by 2 to obtain the radio prqpagation time from each of the plurality of radio base stations to the mobile station.

As is apparent from the above aspects, according to the mobile station position detection scheme of the present invention, the position detection signal is transmitted from the mobile station to the predetermined number of radio base stations through the reverse common channels (random access channels). The position detection signal is received by the plurality of radio base stations through the reverse common channels (random access channels). The radio propagation time from each radio base station to the mobile station is obtained on the basis of the sending time of the latest notification signal, the reception time of the received position detection signal, and the predetermined time in the mobile station. The radio propagation time is obtained by the signal transmitted through the reverse common channel (random access channel) without using any individual communication channel (dedicated channel). For this reason, even when no communication state is set between the mobile communication network control apparatus and the mobile station, the radio propagation time can be obtained.

In addition, the mobile communication network control apparatus can receive, e.g., three radio propagation times and obtain the position of the mobile station on the basis of these radio propagation times and the position information of radio base stations corresponding to the radio propagation times. For this reason, the position of . the mobile station can always be accurately detected.

The above and many other objects, features and advantages of the present invention will become manifest to those skilled in the art upon making reference to the following detailed description and accompanying drawings in which preferred embodiments incorporating the principle of the invention are shown by way of illustrative examples.

### BRIEF DESCRIPTION OF THE DRAWINGS

Fig. 1 is a block diagram showing the arrangement of a conventional mobile station position detection scheme;
Fig. 2 is a timing chart showing the operation procedure of the conventional mobile station position detection scheme shown in Fig. 1;
Fig. 3 is a block diagram showing the arrangement of an embodiment of the present invention;
Fig. 4 is a timing chart for explaining the operation procedure of the embodiment of the present invention shown in Fig. 3;
Fig. 5 is a view showing a method of obtaining a radio propagation time between a mobile station and a radio base station; and
Fig. 6 is a view showing an example in which the position of a mobile station is obtained using three circles.

### DETAILED DESCRIPTION OF THE PREFERRED EMBODIMENTS

A preferred embodiment of the present invention will be described below with reference to the accompanying drawings.

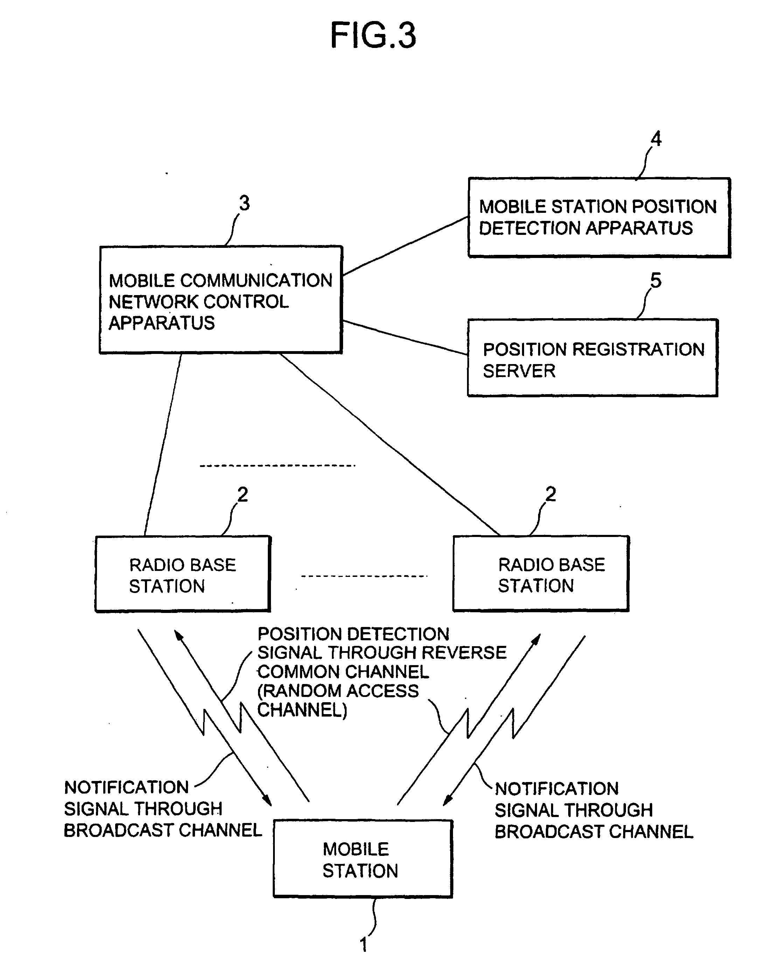

Fig. 3 shows a mobile station position detection scheme according to an embodiment of the present invention. As is apparent from Fig. 3, this embodiment comprises a mobile station 1, a plurality of radio base stations 2, a mobile communication network control apparatus 3, a mobile station position detection apparatus 4, and a position registration server 5.

The mobile communication network control apparatus 3 receives a position detection request signal which requests position detection of the mobile station 1, and checks whether the mobile station 1 is in a communication state. If the mobile station 1 is not in the communication state, the mobile communication network control apparatus 3 sends a position detection instruction signal which instructs position detection of the mobile station 1 to the radio base stations 2 which cover the area where the mobile station 1 is present. In correspondence with this position detection instruction signal, the mobile communication network control apparatus 3 receives, from each of a predetermined number of radio base stations 2, a radio propagation time between that radio base station 2 and the mobile station 1 and outputs the received radio propagation times to the mobile station position detection apparatus 4.

The mobile station position detection apparatus 4 receives a predetermined number of radio propagation times output from the mobile communication network control apparatus 3, searches for and acquires pieces of position information of the radio base stations 2 corresponding to these radio propagation times, and obtains the position of the mobile station 1 from these pieces of position information and the predetermined number of radio propagation times received from the mobile communication network control apparatus 3.

Each of the plurality of radio base stations 2 periodically sends a notification signal, i.e., information necessary for the mobile station 1 to do communication in the area covered by the radio base station 2. Upon receiving the position detection instruction signal from the mobile communication network control apparatus 3, each radio base station 2 transmits the position detection instruction signal to the mobile station 1 designated by the signal. On the other hand, upon receiving a position detection signal used for position detection from the mobile station 1 through a reverse common channel, if the received position detection signal is targeted to the radio base station 2, it obtains a radio propagation time from the radio base station 2 to the mobile station 1 on the basis of the sending time of the latest notification signal, the reception time of the received position detection signal, and a predetermined processing time in the mobile station 1 and transmits the radio propagation time to the mobile communication network control apparatus 3.

The mobile station 1 receives the position detection instruction signal from each radio base station 2. Then, the mobile station 1 receives the notification signal sent from each of the plurality of radio base stations 2, extracts a predetermined number of radio base stations 2 in descending order of reception signal power level, and transmits a position detection signal to these radio base stations 2 through corresponding reverse common channels.

The position registration server 5 receives a position registration signal, i.e., a signal with which the mobile station 1 registers its position through the radio base station 2 and mobile communication network control apparatus 3. The position registration server 5 registers a mobile station ID added to the position registration signal, the ID of the radio base station 2 which has relayed the position registration signal from the mobile station 1, and the area code of the area covered by the radio base station 2 and manages the radio base station ID and mobile station ID for each area code. In addition, the position registration server 5 registers and manages for each mobile station ID whether the mobile station 1 is in the communication state.

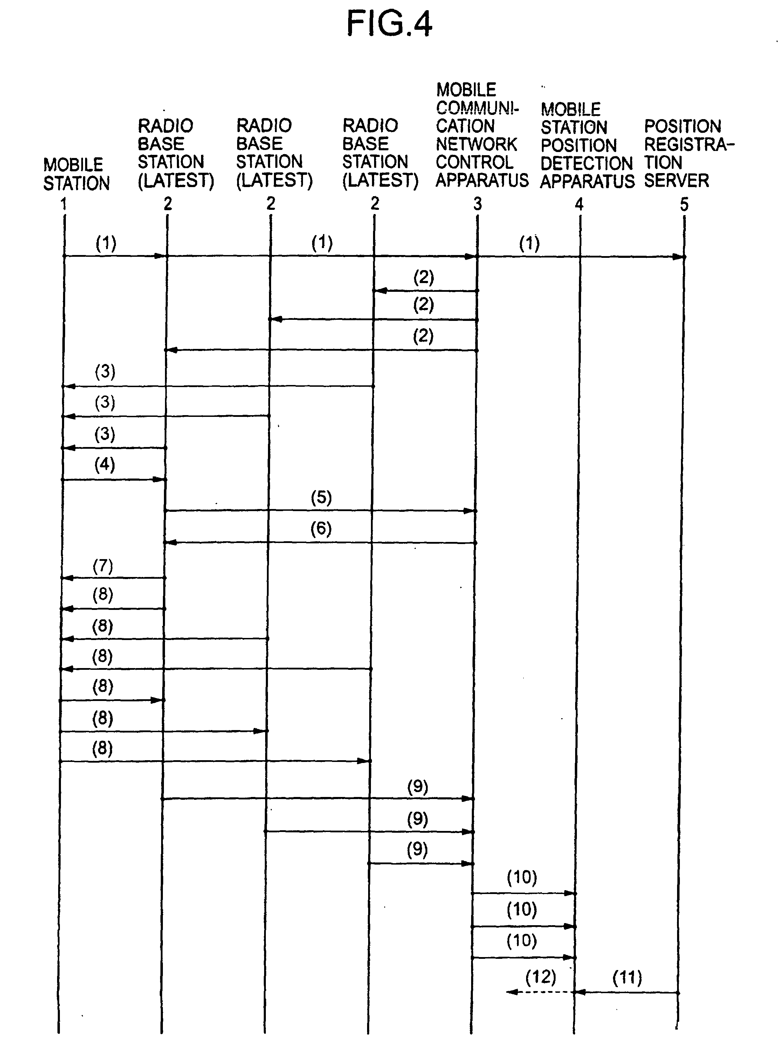

The operation of the mobile station position detection scheme of this embodiment shown in Fig. 3 will be described next in detail with reference to Figs. 4, 5, and 6.

Fig. 4 is a timing chart for explaining the operation procedure of the mobile station position detection scheme shown in Fig. 3.

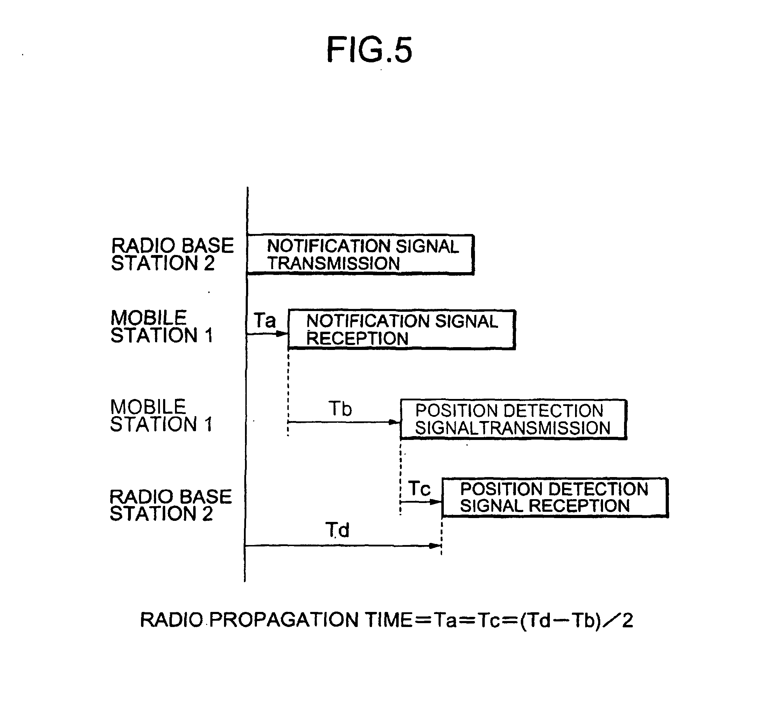

Fig. 5 is a view showing a method of obtaining a radio propagation time between a mobile station and a radio base station.

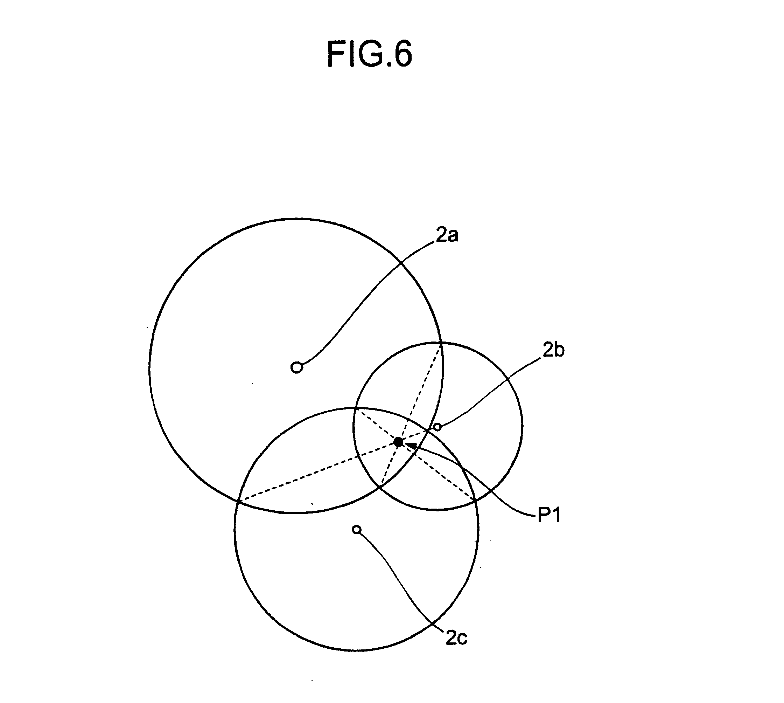

Fig. 6 is a view showing an example in which the position of the mobile station is obtained using three circles.

Referring to Fig. 3, as described in the prior art shown in Fig. 1, when a communication state is set between the mobile station 1 and the mobile communication network control apparatus 3, it registers the state of the mobile station 1 as the communication state in the position registration server 5. When the mobile communication network control apparatus 3 and mobile station 1 cease to be in the communication state, the mobile communication network control apparatus 3 cancels the communication state. That is, when a communication state is set between the mobile station 1 and the mobile communication network control apparatus 3, it registers the communication state in the position registration server 5 in correspondence with the mobile station ID to define the state of the mobile station 1 as the communication state. When the mobile communication network control apparatus 3 and mobile station 1 cease to be in the communication state, the mobile communication network control apparatus 3 cancels the communication state registered in correspondence with the mobile station ID to define the state of the mobile station 1 as a non-communication state.

The mobile station position detection scheme of this embodiment shown in Fig. 3 operates in steps (1) to (12) shown in Fig. 4 (to be described below).
(1) When the mobile station 1 is powered on or moves to the area of another radio base station 2, the radio base station 2 closest to the mobile station 1 receives, from the mobile station 1, a position registration signal which registers the position of the mobile station 1, adds to the position registration signal (with the mobile station ID) the ID of the radio base station 2 and the area code of the area covered by the radio base station 2, and sends the signal to the position registration server 5 through the mobile communication network control apparatus 3. The position registration server 5 registers the mobile station ID, radio base station ID, and area code and manages the radio base station ID and mobile station ID for each area code.
(2) The mobile communication network control apparatus 3 receives a position detection request signal (with the ID of the mobile station 1 to be detected) for requesting position detection of the mobile station 1 from a terminal or the like in or outside the mobile communication network and checks by the position registration server 5 whether the state of the mobile station 1 registered in correspondence with the ID of the mobile station 1 is a communication state. If the mobile station 1 is not in a communication state, the mobile communication network control apparatus 3 sends a call signal (with the mobile station ID) for calling the mobile station 1 having the mobile station ID added to the position detection request signal to the radio base stations 2 having radio base station IDs corresponding to the area codes registered in the position registration server 5.
(3) Each radio base station 2 sends a notification signal (with a radio base station ID) to the mobile station 1 located near the radio base station 2 periodically (at an interval of about 1.2 sec) using a broadcast channel which is used to notify the mobile station 1 of information necessary for communication in the area covered by the radio base station 2 as a notification signal. Upon receiving the call signal (with the mobile station ID) from the mobile communication network control apparatus 3, the radio base station 2 transmits the call signal to the mobile station 1 having the mobile station ID added to the call signal.
(4) The mobile station 1 receives the call signal from the radio base station 2 and sends a reply signal (with the mobile station ID) to the closest radio base station 2 using a reverse common channel (random access channel).
(5) Upon receiving the reply signal (with the mobile station ID) as a reply to the call signal transmitted in step (3), each radio base station 2 adds its ID to the reply signal and sends the signal to the mobile communication network control apparatus 3.
(6) The mobile communication network control apparatus 3 receives the reply signal to the call signal sent in step (2) and sends a position detection instruction signal (with the mobile station ID) for instructing position detection of the mobile station 1 having the mobile station ID added to the reply signal to the radio base station 2 having the radio base station ID added to the reply signal.
(7) Upon receiving the position detection instruction signal from the mobile communication network control apparatus 3, the radio base station 2 transmits the position detection instruction signal to the mobile station 1 having the mobile station ID added to the position detection instruction signal using a forward common channel (forward access channel).
(8) The mobile station 1 receives the position detection instruction signal from the closest radio base station 2. Then, the mobile station 1 receives a notification signal (with a radio base station ID) sent from each of the plurality of radio base stations 2 and extracts a predetermined number of (at least three) radio base stations 2 (to be referred to as three radio base stations 2 hereinafter) in descending order of reception signal power level. The mobile station 1 transmits a position detection signal (containing one mobile station ID and three radio base station IDs) at a high transmission power to the three extracted radio base stations 2 through reverse common channels (random access channels) corresponding to the radio base stations 2. In other words, the mobile station 1 calculates a propagation attenuation factor by radio propagation of a notification signal on the basis of transmission power indicated by transmission power information contained in the notification signal from each of the three extracted radio base stations 2, i.e., transmission power information when each radio base station 2 has transmitted the notification signal, and reception signal power of each notification signal, which is measured by the mobile station 1. The mobile station 1 transmits the position detection signal to the three extracted radio base stations 2 at a transmission power as a sum of power corresponding to the propagation attenuation factor and a predetermined transmission power necessary for the three extracted radio base stations 2 to receive a signal when no propagation attenuation occurs. The transmission period of the position detection signal transmitted through a random access channel is 10 ms at most. For this reason, the transmission power does not influence other channels by interference or noise.
(9) Each radio base station 2 receives the position detection signal used for position detection through a reverse common channel (random access channel). If the position detection signal contains the ID of the radio base station 2, the radio base station 2 obtains a difference (Td) between the sending time of the latest notification signal and the reception time of the received position detection signal, as shown in Fig. 5. A processing time (Tb) in the mobile station 1 (time between reception of the notification signal and sending of the position detection signal), which is experimentally determined in advance by measurement or the like, is subtracted from the difference, and the result is divided by 2, thereby obtaining a radio propagation time (Ta or Tc) from the radio base station 2 to the mobile station 1. The radio base station 2 adds the mobile station ID and radio base station ID to the obtained radio propagation time and transmits the radio propagation time to the mobile communication network control apparatus 3.
(10) In correspondence with the position detection instruction signal sent in step (6), the mobile communication network control apparatus 3 receives, for each of the three radio base stations 2, the radio propagation time (with the radio base station ID and mobile station ID) between the radio base station 2 and the mobile station 1, and outputs the three radio propagation times.
(11) The mobile station position detection apparatus 4 receives the three radio propagation times from the mobile communication network control apparatus 3, acquires the position information of the radio base stations 2 having the radio base station IDs added to the radio propagation times from a database in which the pieces of position information of the radio base stations 2 are stored in advance, and obtains a position P1 of the mobile station 1 from the position information of the radio base stations 2 and the three radio propagation times received from the mobile communication network control apparatus 3. That is, the mobile station position detection apparatus 4 draws three circles which have their centers at three positions indicated by the position information of the radio base stations 2 corresponding to the three radio propagation times and use, as their radii, distances obtained on the basis of the radio propagation times corresponding to the radio base stations 2 (for example, by multiplying the speed of light), and obtains the position of the mobile station 1 from the intersection relationship between the three circles. For example, as shown in Fig. 6, three different "pairs of circles" of three circles are selected. Three lines which connect the intersections between the pairs of circles are drawn. The intersection between the three lines is defined as the position of the mobile station 1. Alternatively, for example, when intersections between at least two of the three circles come into contact at one point within a predetermined error range (e.g., several meters), the point of contact is defined as the position of the mobile station 1. Then, the position of the mobile station 1 is output to the mobile communication network control apparatus 3.
(12) The mobile communication network control apparatus 3 receives and displays the position of the mobile station 1 output from the mobile station position detection apparatus 4, and sends the position information of the mobile station 1 to a terminal or the like in or outside the mobile communication network, which has requested position detection of the mobile station 1.

## Claims

1. A mobile station position detection process for detecting a position of a mobile station (1) on the basis of radio propagation times between said mobile station and a plurality of radio base stations (2) and pieces of position information from said radio base stations, comprising the steps of
receiving by a mobile communication network control means (3) a position detection request signal which requests position detection of said mobile station, when said mobile station is not in a communication state, sending a position detection instruction signal which instructs position detection of said mobile station to radio base stations (2) that cover an area where said mobile station is present, receiving a radio propagation time between said mobile station and each radio base station from each of a pretermined number of radio base stations in correspondence with the position detection instruction signal, and obtaining the position of said mobile station on the basis of the radio propagation times and pieces of position information from said plurality of radio base stations corresponding to the radio propagation times;
periodically sending a notification signal by each of said plurality of radio base stations (2) as information necessary for said mobile station (1) to do communication in the area covered by the radio base station (2), upon receiving the positon detection instruction signal from said mobile communication network control means (3), transmitting the position detection instruction signal to said mobile station (1) designated by the position detection instruction signal, upon receiving a position detection signal used for position detection through a reverse common channel and if the received position detection signal is targeted to the radio base station (2), obtaining the radio propagation time from the radio base station (2) to said mobile station (1) on the basis of a sending time of a latest notification signal, a reception time of the received position detection signal, and a predetermined processing time in said mobile station (1) and transmitting the radio propagation time to said mobile communication network control means (3); and wherein
said mobile station (1) which receives the position detection instruction signal from each of said radio base stations (2), thereafter, receives the notification signal sent from each of said plurality of radio base stations (2), extracts said predetermined number of radio base stations (2) in descending order of reception signal power level, and transmits the position detection signal to said radio base stations (2) through corresponding reverse common channels.

2. A process according to claim 1, wherein said mobile station receives the position detection instruction signal from each of said radio base stations, then receives the notification signal sent from each of said plurality of radio base stations, and extracts at least three radio base stations in descending order of reception signal power level.

3. A process according to claim 2, **characterized in that** said mobile communication network control means draws three circles which have centers at three positions indicated by the position information from said radio base stations corresponding to three of the radio propagation times received from said predetermined number of radio base stations and use, as radii, distances obtained on the basis of the radio propagation times corresponding to said radio base stations, and obtains the position of said mobile station from an intersection relationship between the three circles.

4. A mobile station position detection system for detecting a position of a mobile station (1) on the basis of radio propagation times between said mobile station (1) and a plurality of radio base stations (2) and pieces of position information from said radio base stations, comprising:
a mobile communication network control apparatus (3) for receiving a position detection request signal which requests position detection of said mobile station (1); checking whether said mobile station (1) is in a communication state, when said mobile station (1) is not in the communication state, sending a position detection instruction signal which instructs position detection of said mobile station (1) to radio base stations (2) that cover an area where said mobile station (1) is present, receiving a radio propagation time between said mobile station (1) and each radio base station (2) from each of a predetermined number of radio base stations (2) in correspondence with the position detection instruction signal, and outputting the radio propagation times;
a mobile station position detection apparatus (4) for receiving the radio propagation times output from said mobile communication network control apparatus (3), searching for and acquiring pieces of position information of said radio base stations (2) corresponding to the radio propagation times, and obtaining the position of said mobile station (1) from the pieces of position information and the radio propagation times received from said mobile communication network control apparatus (3),
said plurality of radio base stations (2) each for periodically sending a notification signal as information necessary for said mobile station (1) to do communication in the area covered by the radio base station (2), upon receiving the position detection instruction signal from said mobile communication network control apparatus (3), transmitting the position detection instruction signal to said mobile station (1) designated by the position detection instruction signal, upon receiving a position detection signal used for position detection through a reverse common channel and if the received position detection signal is targeted to the radio base station (2), obtaining the radio propagation time from the radio base station (2) to said mobile station (1) on the basis of a sending time of a latest notification signal, a reception time of the received position detection signal, and a predetermined processing time in said mobile station (1), and transmitting the radio propagation time to said mobile communication network control apparatus (3); and
said mobile station (1) for receiving the position detection instruction signal from each of said radio base station (2), thereafter, receiving the notification signal sent from each of said plurality of radio base stations (2), extracting said predetermined number of radio base stations (2) in descending order of reception signal power level, and transmitting the position detection signal to said radio base stations (2) through corresponding reverse common channels.

5. A system according to claim 4, wherein the system further comprises a position registration server (5) adapted to register whether said mobile station is in the communication state, and
said mobile communication network control apparatus (3) being adapted to receive the position detection request signal which requests position detection of said mobile station (1) and to check by said position registration server (5) whether said mobile station is in the communication state.

6. A mobile station position detection system according to claim 5, wherein
said position registration server (5) is adapted to receive a position registration signal with which the position of said mobile station is registered, register a mobile station ID added to the position registration signal, an ID of the radio base station which has relayed the position registration signal from said mobile station, and an area code of an area covered by the radio base station, manage the radio base station ID and the mobile station ID for each area code, and to register and manage for each mobile station ID whether said mobile station is in a communication state;
said mobile communication network control apparatus (3) being adapted to receive a position detection request signal with an ID of said mobile station to be detected which requests position detection of said mobile station, check by said position registration server whether said mobile station is in the communication state, when said mobile station is not in the communication state, send a call signal (with the mobile station ID) which calls said mobile station having the mobile station ID added to the position detection request signal to said radio base stations having the radio base station Ids corresponding to area codes registered in said position registration server, receive a reply signal to the call signal, send a position detection instruction signal (with the mobile station ID) which instructs position detection of said mobile station having the mobile station ID added to the reply signal to each radio base station having the radio base station ID added to the reply signal, receive a radio propagation time (with the radio base station ID and mobile station ID) between said mobile station and each radio base station from each of a predetermined number of radio base stations in correspondence with the sent position detection instruction signal, and to output the received radio propagation times;
said mobile station position detection apparatus (4) being adapted to receive the radio propagation times output from said mobile communication network control apparatus, acquire pieces of position information of said radio base stations having the radio base station IDs added to the radio propagation times from a database in which the pieces of position information of said radio base stations are stored in advance, and to obtain the position of said mobile station from the pieces of position information of said radio base stations and the radio propagation times received from said mobile communication network control apparatus;
said plurality of radio base stations each being adapted to periodically send a notification signal (with the radio base station ID) to said mobile station located near the radio base station using a broadcast channel serving as a channel used to notify said mobile station of information necessary for communication under the radio base station as a notifaction signal, upon receiving the call signal with the mobile station ID from said mobil communication network control apparatus, transmit the call signal to said mobile station having the mobile station ID added to the call signal, upon receiving the reply signal (with the mobile station ID) as a reply to the call signal, add the ID of the radio base station to the reply signal, send the reply signal to said mobile communication network control apparatus, upon receiving the position detection instruction signal from said mobile communication network control apparatus, transmit the position detection instruction signal to said mobile station having the mobile station ID added to the position detection instruction signal, upon receiving a position detection signal used for position detection through a reverse common channel and when the position detection signal contains the ID of the radio base station, to obtain the radio propagation time from the radio base station to said mobile station on the basis of a sending time of a latest notification signal, a reception time of the received position detection signal, and a predetermined processing time in said mobile station, add the ID of the radio base station to the obtained radio propagation time, and to transmit the radio propagation time to said mobile communication network control apparatus; and
said mobile station which receives the call signal from the radio base station, is adapted to the reply signal with the mobile station ID to the closest radio base staation (2) using the reverse common channel, after the position detection instruction signal is received from the closest radio base station, receive the notification signal (with the radio base station ID) sent from each of said plurality of radio base stations, extract said predetermined number of radio base stations in descending order of reception signal power levels, and transmit the position detection signal containing the mobile station ID and a predetermined number of radio base station IDs to said radio base stations (2) through corresponding reverse common channels.

7. A system according to any one of claims 4, 5, and 6, **characterized in that** said mobile station (1) is adapted to receive the position detection instruction signal from each of said radio base stations, then to receive the notification signal sent from each of said pluality of radio base stations, and to extract at least three radio base stations in descending order of reception signal power level.

8. A system according to claim 7, wherein said mobile station position dectection apparatus is adapted to draw three circles which have centers at three positions indicated by the position information from said radio base stations corresponding to three of the radio propagation times received from said mobile communication network control apparatus and use, as radii, distances obtained on the basis of the radio propagation times corresponding to said radio base stations, and to obtain the position of said mobile station from an intersection relationship between the three circles.

9. A system according to claim 8, charcterized in that when intersections between at least two of the three circles come into contact at one point within a predetermined error range, a point of contact is defined as a position of said mobile station.

10. A system according to claim 8, **characterized in that** three different pairs of circles of the three circles are selected, three lines which connect intersections between the pairs of circes are drawn, and an intersection between the three lines is defined as the position of said mobile station.

11. A system according to any one of claims 4 to 10, **characterized in that** said radio base station (2) is adapted to subtract a predetermined processing time in said mobile station from a difference between the sending time of the latest notification signal and the reception time of the position detection signal and divides a thus obtained time by 2 to obtain the radio propagation time from each of said plurality of radio base stations to said mobile station.

12. A system according to claim 11, **characterized in that** the predetermined processing time is a time between reception of the notification signal and sending of the position detection signal by said mobile station.

## Patentansprüche

1. Mobilstation-Positionserfassungsprozess zur Erfassung einer Position einer Mobilstation (1) auf Grundlage von Funklaufzeiten zwischen der Mobilstation und einer Anzahl von Funkbasisstationen (2) und Stücken von Positionsinformation von den Funkbasisstationen mit den Schritten
Empfangen eines Positionserfassungs-Anforderungssignals durch ein Mobilkommunikationsnetzwerk-Steuermittel (3), das die Positionserfassung der Mobilstation anfordert, wenn die Mobilstation nicht in einem Kommunikationszustand ist, Senden eines Positionsdetektions-Befehlssignals, das die Positionserfassung der Mobilstation anweist, an die Funkbasisstationen (2) die einen Bereich abdecken, in dem die Mobilstation anwesend ist, Empfangen einer Funklaufzeit zwischen der Mobilstation und jeder Funkbasisstation von jeder einer vorgegebenen Anzahl von Basisstationen in Übereinstimmung mit dem Positionserfassungs-Befehlssignal, und Erhalten der Position der Mobilstation auf Grundlage der Funklaufzeiten und Stücken von Positionsinformation von der Anzahl von Funkbasisstationen entsprechend den Funklaufzeiten,
Periodisches Senden eines Mitteilungssignals durch jede der Anzahl von Basisstationen (2) als Information, die für die Mobilstation (1) erforderlich ist, um in dem durch die Funkbasisstationen (2) abgedeckten Bereich Kommunikation durchzuführen, bei Empfang des Positionserfassungs-Befehlssignals von dem Mobilkommunikationsnetzwerk-Steuermittel (3), Übermitteln des Positionserfassungs-Befehlssignals an die Mobilstation (1), die durch das Positionserfassungs-Befehlssignals bezeichnet ist, bei Empfang eines Positionserfassungssignals, das für Positionserfassung über einen gemeinsamen Rückkanal verwendet wird, und, falls das empfangene Positionserfassungssignal auf die Funkbasisstation (2) gezielt ist, Erhalten der Funklaufzeit von der Funkbasisstation (2) zu der Mobilstation (1) auf Grundlage einer Sendezeit eines letzten Mitteilungssignals, einer Empfangszeit des empfangenen Positionserfassungssignals und einer vorgegebenen Verarbeitungszeit in der Mobilstation (1) und Übermitteln der Funklaufzeit an das Mobilkommunikationsnetzwerk-Steuermittel (3), und wobei
die Mobilstation (1), die das Positionserfassungs-Befehlssignal von jeder der Funkbasisstationen (2) empfängt, anschließend das Mitteilungssignal erhält, das von jeder der Anzahl von Funkbasisstationen (2) ausgesandt wurde, die vorgegebene Anzahl von Funkbasisstationen (2) in abfallender Reihenfolge des Empfangssignal-Leistungspegels extrahiert und das Positionserfassungssignal an die Funkbasisstationen (2) durch entsprechende gemeinsame Rückkanäle überträgt.

2. Prozess nach Anspruch 1, wobei die Mobilstation das Positionserfassungs-Befehlssignal von jeder der Basisstationen empfängt, dann das Mitteilungssignal empfängt, das von jeder der Anzahl von Funkstationen ausgesandt wurde, und zumindest drei Funkbasisstationen in abfallender Reihenfolge des Empfangssignal-Leistungspegels extrahiert.

3. Prozess nach Anspruch 2, **dadurch gekennzeichnet, dass** das Mobilkommunikationsnetzwerk-Steuermittel drei Kreise mit Mittelpunkten an drei Positionen zeichnet, die durch die Positionsinformationen von den Funkbasisstationen angegeben werden, entsprechend zu drei der Funklaufzeiten, die von der vorgegebenen Anzahl von Basisstationen empfangen wurden, und als Radien Abstände verwendet, die auf Grundlage der Funklaufzeiten entsprechend den Funkbasisstationen erhalten werden, und die Position der Mobilstation aus einer Schnittbeziehung zwischen den drei Kreisen erhält.

4. Mobilstation-Positionserfassungssystem zur Erfassung einer Position einer Mobilstation (1) auf Grundlage von Funklaufzeiten zwischen der Mobilstation (1) und einer Anzahl von Funkbasisstationen (2) und Stücken von Positionsinformation von den Basisstationen mit:
einem Mobilkommunikationsnetzwerk-Steuergerät (3) zum Empfangen eines Positionserfassung-Anforderungssignals, das die Positionserfassung der Mobilstation anfordert, Überprüfen, ob die Mobilstation in einem Kommunikationszustand ist, wenn die Mobilstation (1) nicht in einem Kommunikationszustand ist, Aussenden eines Positionserfassungs-Befehlssignals, das die Positionserfassung der Mobilstation (1) anweist, an die Funkbasisstationen (2), die einen Bereich abdecken, in dem die Mobilstation (1) anwesend ist, Empfangen einer Funklaufzeit zwischen der Mobilstation (1) und jeder Funkbasisstation (2) von jeweils einer vorgegebenen Anzahl von Funkbasisstationen (2) in Übereinstimmung mit dem Positionserfassungs-Befehlssignal, und Ausgeben der Funklaufzeiten,
einer Mobilstation-Positionserfassungsvorrichtung (4) zum Empfangen der Funklaufzeiten, die von der Mobilkommunikationsnetzwerk-Steuervorrichtung ausgegeben wurden zum, Suchen und Aufnehmen von Stücken von Positionsinformation der Funkbasisstationen (2), die den Funklaufzeiten entsprechen, und zum Erhalten der Position der Mobilstation (1) aus den Stücken den Positionsinformation und der Funklaufzeiten, die von der Mobilkornmunikationsnetzwerk-Steuervorrichtung (3) erhalten wurden,
wobei die Anzahl von Funkbasisstationen (2) jeweils zum periodischen Versenden eines Mitteilungssignals ausgebildet sind als Information für die Mobilstation (2), Kommunikation in dem Bereich durchzuführen, der von der Funkbasisstation (2) abgedeckt wird, bei Empfang des Positionserfassungs-Befehlssignals von der Mobilkommunikationnetzwerk-Steuervorrichtung (2), Übermittlung des Positionserfassungs-Befehlssignals an die Mobilstation (1), die durch das Positionserfassungs-Befehlssignal bezeichnet ist, bei Empfang eines Positionserfassungs-Signals, das für die Positionserfassung über einen gemeinsamen Rückkanal verwendet wird, und, falls das empfangene Positionserfassungssignal auf die Funkbasisstation (2) gezielt ist, Erhalten der Funklaufzeit von der Funkbasisstation (2) zu der Mobilstation (1) auf Grundlage einer Sendezeit eines letzten Mitteilungssignals, einer Empfangszeit des empfangenen Positionserfassungssignals und einer vorgegebenen Verarbeitungszeit in der Mobilstation (1) und Übermitteln der Funklaufzeit an die Mobilkommunikationsnetzwerk-Steuervorrichtung (3), und
der Mobilstation (1) zum Empfangen des Positionserfassungs-Befehlssignals von jeder der Funkbasisstationen (2), zum anschließenden Empfangen des Mitteilungssignals, das von jeder der Anzahl von Funkbasisstationen (2) gesendet wurde, Extrahieren der vorgegebenen Anzahl von Funkbasisstationen (2) in abfallender Reihenfolge des Empfangssignal-Leistungspegels und zum Übermitteln des Positionserfassungssignals an die Funkbasisstationen (2) durch entsprechende gemeinsame Rückkanäle.

5. System nach Anspruch 4, wobei das System ferner einen Positionsregistrierungsserver (5) aufweist, der ausgebildet ist zu registrieren, ob die Mobilstation im Kommunikationszustand ist,
wobei die Mobilkommunikationsnetzwerk-Steuervorrichtung (3) ausgebildet ist, um das Positionserfassunganforderungssignal zu empfangen, das die Positionserfassung der Mobilstation (1) anfordert, und über den Positionsregistrierungsserver (5) festzustellen, ob die Mobilstation in einem Kommunikationszustand ist.

6. Mobilstation-Positionierungserfassungssystem nach Anspruch 5, wobei
der Positionsregistrierungsserver (5) ausgebildet ist, um ein Positionsregistrierungssignal zu empfangen, mit dem die Position der Mobilstation registriert wird, eine Mobilstation-ID, die dem Positionsregistrierungssignal zugefügt ist, eine ID der Funkstation, die das Positionsregistrierungssignal von der Mobilstation weitergeleitet hat, und einen Bereichscode eines Bereichs, der durch die Funkbasisstation abgedeckt wird, die Funkbasisstation-ID und die Mobilstation-ID für jeden Bereichscode zu verwalten und für jede Mobilstation-ID zu registrieren und zu verwalten, ob die Mobilstation in einem Kommunikationszustand ist,
wobei die Mobilkommunikationsnetzwerk-Steuervorrichtung (3) angepaßt ist, ein Positionserfassungsanforderungssignal zu erfassen mit einer ID einer Mobilstation, die zu erfassen ist, die die Positionserfassung der Mobilstation anfordert, zur Prüfung durch den Positionsregistrationsserver, ob die Mobilstation in dem Kommunikationszustand ist, wenn die Mobilstation nicht in dem Kommunikationszustand ist, ein Rufsignal (mit der Mobilstation-ID) zu senden, das die Mobilstation mit der Mobilstations-ID, die dem Positionserfassungs-Anforderungssignal zugefügt ist, ruft, zu den Basisstationen, die die Funkbasisstation-ID aufweisen, die den Bereichscodes entsprechen, die in dem Positionsregistrierungsserver registriert sind, zum Empfangen eines Antwortsignals auf das Rufsignal, Senden eines Positionserfassungs-Befehlssignals (mit der Mobilstation-ID), das die Positionserfassung der Mobilstation mit der Mobilstation-ID, die dem Antwortsignal zugefügt ist, zu jeder Funkbasisstation mit der Funkbasisstations-ID, die dem Antwortsignal zugefügt ist, anweist, zum Empfangen einer Funklaufzeit (mit der Funkbasisstations-ID und der Mobilstations-ID) zwischen der Mobilstation und jeder Funkbasisstation von jeweils einer vorgegebenen Anzahl von Basisstationen in Übereinstimmung mit dem gesandten Positionserfassungs-Befehlssignal, und zur Ausgabe der empfangenen Funklaufzeiten,
wobei die Mobilstation-Positionserfassungsvorrichtung (4) angepaßt ist zum Empfangen der Funklaufzeiten, die von dem Mobilkommunikationsnetzwerk-Steuervorrichtung ausgegeben wurden, zum Aufnehmen von Stücken von Positionsinformationen der Funkbasisstationen mit der Funkbasisstations-ID, die den Funklaufzeiten von einer Datenbasis addiert wurden, in der die Stücke von Positionsinformationen der Funkbasisstationen im voraus gespeichert sind, und zum Erhalten der Position der Mobilstation von den Stücken von Positionsinformation der Funkbasisstationen und der Funklaufzeiten, die von der Mobilkommunikationsnetzwerk-Steuervorrichtung erhalten wurden,
wobei die Anzahl von Funkbasisstationen jeweils ausgebildet sind zum periodischen Senden eines Mitteilungssignals (mit einer Funkbasisstation-ID) an die Mobilstation, die nahe der Funkbasisstation angeordnet ist, unter Verwendung eines Funkkanals, der als Kanal verwendet wird, zum Mitteilen von Information an die Mobilstation, die für die Kommunikation unter den Funkbasisstationen erforderlich ist, als ein Mitteilungssignal, bei Empfang des Rufsignals mit der Mobilstations-ID von der Mobilkommunikationsnetzwerk-Steuervorrichtung, zum Übertragen des Rufsignals an die Mobilstation mit der Mobilstations-ID, die dem Rufsignal zugefügt wurde, bei Empfang des Antwortsignals (mit der Mobilstations-ID) als Antwort auf das Rufsignal, Addieren der ID der Funkbasisstation an das Antwortsignal, Senden des Antwortsignals an die Kommunikationsnetzwerk-Steuervorrichtung bei Empfang des Positionserfassungs-Befehlssignals von der Mobilkommunikationsnetzwerk-Steuervorrichtung, Übertragen des Positionserfassungs-Befehlssignals an die Mobilstation mit der Mobilstations-ID, die dem Positionserfassungs-Befehlssignal zugefügt wurde, bei Empfang eines Positionserfassungssignals, das für eine Positionserfassung über einen gemeinsamen Rückkanal verwendet wird, und, wenn das Positionserfassungssignal die ID der Funkbasisstation enthält, zum Erhalten der Funklaufzeit von der Funkbasisstation zu der Mobilstation auf Grundlage einer Sendezeit eines letzten Mitteilungssignals, einer Empfangszeit des empfangenen Positionserfassungssignals und einer vorgegebenen Verarbeitungszeit in der Mobilstation, Addieren der ID der Funkbasisstation zu der erhaltenen Funklaufzeit und zum Übertragen der Funklaufzeit an die Mobilkommunikationsnetzwerk-Steuervorrichtung, und
wobei die Mobilstation, die das Rufsignal von der Basisstation empfängt, ausgebildet ist zum Antwortsignal mit der Mobilstations-ID zu der nächsten Funkbasisstation (2) unter Verwendung des gemeinsamen Rückkanals, nachdem das Positionserfassungsbefehlssignal von der nächsten Funkbasisstation empfangen wurde, zum Empfangen des Mitteilungssignals (mit der Funkbasisstation-ID), das von jeder der Anzahl von Funkbasisstationen gesendet wurde, zum Extrahieren der vorgegebenen Anzahl von Funkbasisstationen in abfallender Folge von Empfangssignalleistungspegeln und zum Übermitteln des Positionserfassungssignals, das die Mobilstation-ID und eine vorgegebene Anzahl von Funkbasisstations-ID enthält, an die Funkbasisstationen über entsprechende gemeinsame Rückkanäle.

7. System nach einem der Ansprüche 4, 5 und 6,
**dadurch gekennzeichnet, dass** die Mobilstation angepaßt ist zum Empfangen des Positionserfassungs-Befehlssignals von jeder der Funkbasisstationen, dann zum Empfangen des Mitteilungssignals, das von jeder der Anzahl von Funkbasisstationen gesendet wurde, und zum Extrahieren von zumindest drei Funkbasisstationen in abfallender Reihenfolge von Empfangssignal-Leistungspegeln.

8. System nach Anspruch 7, wobei die Mobilstation-Positionserfassungsvorrichtung angepaßt ist zum Zeichnen dreier Kreise mit Mittelpunkten an drei Positionen, die durch die Positionsinformation von den Funkbasisstationen erhalten wurden, entsprechen drei der Funklaufzeiten, die von der Mobilkommunikationsnetzwerk-Steuervorrichtung empfangen wurden, und Verwenden von Abständen als Radien, die auf Grundlage der Funklaufzeiten entsprechend den Funkbasisstationen erhalten wurden, und zum Erhalten der Position der Mobilstation aus einer Schnittbeziehung zwischen den drei Kreisen.

9. System nach Anspruch 8, **dadurch gekennzeichnet, dass**, wenn Schnittstellen zwischen zumindest zwei der drei Kreise an einem Punkt innerhalb eines vorgegebenen Fehlerbereichs in Kontakt kommen, der Kontaktpunkt als Position der Mobilstation definiert wird.

10. System nach Anspruch 1, **dadurch gekennzeichnet, dass** drei unterschiedliche Paare von Kreisen der drei Kreise ausgewählt werden, drei Linien, die Schnittstellen zwischen den Kreispaaren verbinden, gezeichnet werden und eine Schnittstelle zwischen den drei Linien als Position der Mobilstation definiert wird.

11. System nach einem der Ansprüche 4 bis 10,
**dadurch gekennzeichnet, dass** die Funkbasisstation (2) angepaßt ist zum Subtrahieren einer vorgegebenen Verarbeitungszeit in der Mobilstation von einer Differenz zwischen der Sendezeit des letzten Mitteilungssignals und der Empfangszeit des Positionserfassungssignals und zum Dividieren der so erhaltenen Zeit durch zwei, um eine Funklaufzeit von jeder der Anzahl von Funkbasisstationen an die Mobilstation zu erhalten.

12. System nach Anspruch 11, **dadurch gekennzeichnet, dass** die vorgegebene Verarbeitungszeit eine Zeit zwischen dem Empfang des Mitteilungssignals und dem Senden des Positionserfassungssignals durch die Mobilstation ist.

## Revendications

1. Procédé de détection de la position d'une station mobile pour détecter une position d'une station mobile (1) sur la base de temps de propagation radio entre ladite station mobile et une pluralité de stations de base radio (2) et d'éléments d'information de la position provenant desdites stations de base radio, comprenant les étapes
de réception par des moyens de commande (3) du réseau de communication mobile d'un signal de demande de détection de la position qui demande la détection de la position de ladite station mobile, lorsque ladite station mobile n'est pas dans un état de communication, d'envoi d'un signal d'instruction de détection de la position qui instruit la détection de la position de ladite station mobile auxdites stations de base radio (2) qui couvrent une zone où ladite station mobile est présente, de réception d'un temps de propagation radio entre ladite station mobile et chaque station de base radio à partir de chacune d'un nombre prédéterminé de stations de base radio en correspondance avec le signal d'instruction de détection de la position, et d'obtention de la position de ladite station mobile sur la base des temps de propagation radio et des éléments d'information de la position à partir de ladite pluralité de stations de base radio correspondant aux temps de propagation radio ;
d'envoi périodique d'un signal de notification par chacune de ladite pluralité de stations de base radio (2) comme informations nécessaires pour ladite station mobile (1) pour réaliser des communications dans la zone couverte par la station de base radio (2), lors de la réception du signal d'instruction de détection de la position provenant desdits moyens de commande (3) du réseau de communication mobile, de transmission du signal d'instruction de détection de la position à ladite station mobile (1) désignée par le signal d'instruction de détection de la position, lors de la réception d'un signal de détection de la position utilisé pour la détection d'une position par un canal commun inverse et si le signal de détection de la position reçu est ciblé vers la station de base radio (2), d'obtention du temps de propagation radio depuis la station de base radio (2) vers ladite station mobile (1) sur la base d'un temps d'émission d'un dernier signal de notification, un temps de réception du signal de détection de la position reçu, et un temps de traitement prédéterminé dans ladite station mobile (1), et de transmission du temps de propagation radio auxdits moyens de commande (3) du réseau de communication mobile (3) ; et dans lequel
ladite station mobile (1) qui reçoit le signal d'instruction de détection de la position de chacune desdites stations de base radio (2), ensuite, reçoit le signal de notification envoyé de chacune de ladite pluralité de stations de base radio (2), extrait ledit nombre prédéterminé de stations de base radio (2) dans un ordre décroissant de niveau de puissance du signal de réception, et transmet le signal de détection de la position auxdites stations de base radio (2) par des canaux communs inverses correspondants.

2. Procédé selon la revendication 1, dans lequel ladite station mobile reçoit le signal d'instruction de détection de la position de chacune desdites stations de base radio, puis reçoit le signal de notification envoyé de chacune de ladite pluralité de stations de base radio, et extrait au moins trois stations de base radio en ordre décroissant de niveau de puissance du signal de réception.

3. Procédé selon la revendication 2, **caractérisé en ce que** lesdits moyens de commande du réseau de communication mobile tracent trois cercles qui ont des centres à trois positions indiquées par l'information de position provenant desdites stations de base radio qui correspondent aux trois des temps de propagation radio reçus dudit nombre prédéterminé de stations de base radio et utilisent, comme rayons, des distances obtenues sur la base des temps de propagation radio correspondant auxdites stations de base radio, et obtiennent la position de ladite station mobile à partir des intersections entre les trois cercles.

4. Système de détection de la position d'une station mobile pour détecter une position d'une station mobile (1) sur la base de temps de propagation radio entre ladite station mobile (1) et une pluralité de stations de base radio (2) et des éléments d'information de la position provenant desdites stations de base radio, comprenant :
un appareil de commande (3) du réseau de communication mobile pour recevoir un signal de demande de détection de la position qui demande une détection de la position de ladite station mobile (1), en vérifiant si ladite station mobile (1) est dans un état de communication, lorsque ladite station mobile (1) n'est pas dans l'état de communication, envoyer un signal d'instruction de détection de la position qui instruit la détection de la position de ladite station mobile (1) auxdites stations de base radio (2) qui couvrent une zone où ladite station mobile (1) est présente, recevoir un temps de propagation radio entre ladite station mobile (1) et chaque station de base radio (2) à partir de chacune d'un nombre prédéterminé de stations de base radio (2) correspondant au signal d'instruction de détection de la position ; et délivrer les temps de propagation radio ;
un appareil de détection (4) de la position d'une station mobile pour recevoir les temps de propagation radio délivrés dudit appareil de commande (3) du réseau de communication radio, rechercher et acquérir des éléments d'information de la position desdites stations de base radio (2) correspondant aux temps de propagation radio, et obtenir la position de ladite station mobile (1) à partir des éléments d'information de la position et des temps de propagation radio reçus dudit appareil de commande (3) du réseau de communication mobile,
ladite pluralité de stations de base radio (2), chacune pour envoyer périodiquement un signal de notification comme information nécessaire à ladite station mobile (1) pour réaliser des communications dans la zone couverte par la station de base radio (2), lors de la réception du signal d'instruction de détection de la position provenant dudit appareil de commande (3) du réseau de communication mobile, transmettre le signal d'instruction de détection de la position à ladite station mobile (1) désignée par le signal d'instruction de détection de la position, lors de la réception d'un signal de détection de la position utilisé pour la détection de la position par un canal commun inverse et si le signal de détection de la position reçu est ciblé vers la station de base radio (2), pour obtenir le temps de propagation radio provenant de la station de base radio (2) vers ladite station mobile (1) sur la base d'un temps d'envoi du dernier signal de notification, un temps de réception du signal de détection de la position reçu, et un temps de traitement prédéterminé dans ladite station mobile (1), et transmission du temps de propagation radio audit appareil de commande (3) du réseau de communication mobile ; et
ladite station mobile (1) pour recevoir le signal d'instruction de détection de la position provenant de chacune desdites stations radio de base (2), ensuite, pour extraire ledit nombre prédéterminé de stations de base radio (2) en ordre décroissant de niveau de puissance du signal de réception, et transmettre le signal de détection de la position auxdites stations de base radio (2) par des canaux communs inverses correspondants.

5. Système selon la revendication 4, dans lequel le système comprend en outre un serveur d'enregistrement de position (5) adapté pour enregistrer si ladite station mobile est dans un état de communication, et
ledit appareil de commande (3) du réseau de communication mobile étant adapté pour recevoir le signal de demande de détection de la position qui demande la détection de la position de ladite station mobile (1) et pour vérifier par ledit serveur d'enregistrement de position (5) si ladite station mobile est dans l'état de communication.

6. Système de détection de la position de stations mobiles selon la revendication 5, dans lequel
ledit serveur d'enregistrement de position (5) est adapté pour recevoir un signal d'enregistrement de position avec lequel la position de ladite station mobile est enregistrée, enregistrer une ID - identification - de station mobile ajoutée au signal d'enregistrement de position, une ID de la station de base radio qui a relayé le signal d'enregistrement de la position depuis ladite station mobile, et un code de zone d'une zone couverte par la station de base radio, gérer l'ID de la station de base radio et l'ID de la station mobile pour chaque code de zone, et pour enregistrer et gérer pour chaque ID de station mobile si ladite station mobile est dans un état de communication ;
ledit appareil de commande (3) du réseau de communication mobile étant adapté pour recevoir un signal de demande de détection de la position avec une ID de ladite station mobile devant être détectée qui demande la détection de la position de ladite station mobile, pour vérifier par ledit serveur d'enregistrement de position si ladite station mobile est dans l'état de communication, lorsque ladite station mobile n'est pas dans l'état de communication, envoyer un signal d'appel (avec l'ID de la station mobile), qui appelle ladite station mobile ayant l'ID de la station mobile ajoutée au signal de demande de détection de la position, auxdites stations de base radio ayant les ID de la station de base radio correspondant aux codes de zone enregistrés dans ledit serveur d'enregistrement de position, recevoir un signal de réponse au signal d'appel, envoyer un signal d'instruction de détection de la position (avec l'ID de la station mobile) qui instruit la détection de la position de ladite station mobile ayant l'ID de la station mobile ajoutée au signal de réponse, à chaque station de base radio ayant l'ID de la station de base radio ajoutée au signal de réponse, recevoir un temps de propagation radio (avec l'ID de la station de base radio et l'ID de la station mobile) entre ladite station mobile et chaque station de base radio à partir d'un nombre prédéterminé de stations de base radio en correspondance avec le signal d'instruction de détection de la position envoyé, et pour délivrer les temps de propagation radio reçus ;
ledit appareil de détection (4) de la position d'une station mobile étant adapté pour recevoir les temps de propagation radio délivrés dudit appareil de commande du réseau de communication mobile, acquérir des éléments d'information de position desdites stations de base radio ayant les ID de la station de base radio ajoutées aux temps de propagation radio à partir d'une base de données dans laquelle les éléments d'information de position desdites stations de base radio sont enregistrés à l'avance, et pour obtenir la position de ladite station mobile à partir des éléments d'information de position desdites stations de base radio et les temps de propagation radio reçus dudit appareil de commande du réseau de communication mobile ;
ladite pluralité de stations de base radio étant chacune adaptée pour envoyer périodiquement un signal de notification (avec l'ID de la station de base radio) à ladite station mobile située prés de la station de base radio utilisant un canal de radiodiffusion servant de canal utilisé pour notifier à ladite station mobile les informations nécessaires pour la communication suivant la station de base radio comme signal de notification, lors de la réception du signal d'appel avec l'ID de la station mobile provenant de l'appareil de commande du réseau de communication mobile, transmettre le signal d'appel à ladite station mobile ayant l'ID de la station mobile ajouté au signal d'appel, lors de la réception du signal de réponse (avec l'ID de la station mobile) comme réponse au signal d'appel, ajouter l'ID de la station de base radio au signal de réponse, envoyer le signal de réponse audit appareil de commande du réseau de communication mobile, lors de la réception du signal d'instruction de détection de la position provenant dudit appareil de commande du réseau de communication mobile, transmettre le signal d'instruction de détection de la position à ladite station mobile ayant l'ID de la station mobile ajoutée au signal d'instruction de détection de la position, lors de la réception d'un signal de détection de la position utilisé pour la détection de la position par un canal commun inverse et lorsque le signal de détection de la position contient l'ID de la station de base radio, pour obtenir le temps de propagation radio provenant de la station de base radio à ladite station mobile sur la base d'un temps d'envoi d'un dernier signal de notification, un temps de réception du signal de détection de la position reçu, et un temps de traitement prédéterminé dans ladite station mobile, ajouter l'ID de la station de base radio au temps de propagation radio obtenu, et pour transmettre le temps de propagation radio audit appareil de commande du réseau de communication mobile ; et
ladite station mobile qui reçoit le signal d'appel de la station de base radio, est adaptée au signal de réponse avec l'ID de la station mobile à la station de base radio la plus proche (2) en utilisant le canal commun inverse, après que le signal d'instruction de détection de la position est reçu de la station de base radio la plus proche, pour recevoir le signal de notification (avec l'ID de la station de base radio) envoyé de chacune de ladite pluralité de stations de base radio, extraire ledit nombre prédéterminé de stations de base radio en ordre décroissant de niveau de puissance du signal de réception, et transmettre le signal de détection de la position contenant l'ID de la station mobile et un nombre prédéterminé d'ID de station de base radio auxdites stations de base radio (2) par des canaux communs inverses correspondants.

7. Système selon l'une quelconque des revendications 4, 5 et 6, **caractérisé en ce que** ladite station mobile (1) est adaptée pour recevoir le signal d'instruction de détection de la position de chacune desdites stations de base radio, pour recevoir ensuite le signal de notification envoyé de chacune de ladite pluralité de stations de base radio, et pour extraire au moins trois stations de base radio en ordre décroissant de niveau de puissance du signal de réception.

8. Système selon la revendication 7, dans lequel ledit appareil de détection de la position de station mobile est adapté pour tracer trois cercles ayant des centres aux trois positions indiquées par l'information de position provenant desdites stations de base radio qui correspondent à trois des temps de propagation radio reçus dudit appareil de commande du réseau de communication mobile et utiliser, comme rayons, des distances obtenues sur la base des temps de propagation radio correspondant auxdites stations de base radio, et pour obtenir la position de ladite station mobile d'après les intersections entre les trois cercles.

9. Système selon la revendication 8, **caractérisé en ce que** lorsque des intersections entre au moins deux des trois cercles viennent en contact à un point situé dans une plage d'erreur prédéterminée, un point de contact est défini comme position de ladite station mobile.

10. Système selon la revendication 8, **caractérisé en ce que** trois paires différentes de cercles des trois cercles sont sélectionnées, trois lignes raccordant des intersections entre les paires de cercles sont tracées, et une intersection entre les trois lignes est définie comme position de ladite station mobile.

11. Système selon l'une quelconque des revendications 4 à 10, **caractérisé en ce que** ladite station de base radio (2) est adaptée pour soustraire un temps de traitement prédéterminé dans ladite station mobile à partir d'une différence entre le temps d'envoi du dernier signal de notification et le temps de réception du signal de détection de position et divise un temps ainsi obtenu par 2 pour obtenir le temps de propagation radio de chacune de ladite pluralité de stations de base radio à ladite station mobile.

12. Système selon la revendication 11, **caractérisé en ce que** le temps de traitement prédéterminé est un temps existant entre la réception du signal de notification et l'envoi du signal de détection de la position par ladite station mobile.
